# EUROPEAN PATENT SPECIFICATION

(11) **EP 0 380 246 B1**
(45) Date of publication and mention of the grant of the patent: **18.11.1993**
(21) Application number: 90300568.4
(22) Date of filing: 19.01.1990
(51) Int. Cl.: B62D 5/04

(54) **Electric motor powered power steering arrangement with feature of decoupling motor from steering shaft**
Servolenkung mit Antrieb durch einen elektrischen Motor und Auskuppeln des Motors von der Lenkwelle
Direction assistée par un moteur électrique avec fonction de débrayage du moteur et de l'arbre de direction

(30) Priority: 19.01.1989 JP 10285/89
(43) Date of publication of application: 01.08.1990
(73) Proprietor: ATSUGI UNISIA CORPORATION, Atsugi-shi Kanagawa-ken (JP)
(72) Inventor: Io, Shinichi, Atsugi-shi, Kanagawa-ken (JP); Morioka, Yuzuru, Atsugi-shi, Kanagawa-ken (JP)
(74) Representative: Godwin, Edgar James

(56) References cited:
- EP-A- 0 051 515
- EP-A- 0 081 025
- WO-A-84/00199
- DE-A- 2 247 135
- FR-A- 2 339 520

## Description

The present invention relates generally to a power steering arrangement for an automotive vehicle. More specifically, the invention relates to a power steering arrangement which employs an electric motor as an assisting power source.

One example of conventionally proposed electrically powered power steering arrangement has been disclosed in Japanese Patent First (unexamined) Publication (Tokkai) Shows 62-273165. In the disclosed arrangement, an electric motor is coupled with a steering shaft via a gear. An electromagnetic clutch is interposed between the motor and the gear for establishing and blocking torque transmission between the motor and the gear.

In such construction, relatively large capacity of electromagnetic clutch is required for satisfactorily controlling transmission of the driving torque of the electric motor. Therefore, the overall size and weight of the steering arrangement becomes bulky and heavy. Furthermore, in order to control the clutch externally, complicated electric wiring is required, making the production cost of the arrangement unacceptably high.

Electric motor powered steering arrangements for automotive vehicles are already known, comprising:
a steering shaft which is connected to a steering mechanism for causing toe angle change of a vehicular wheel, the steering shaft being connected to manually operable means for entry of steering demand;
an electric motor responsive to a control signal for generating driving torque;
a gear train comprising a plurality of gears including a main gear for transmitting driving torque generated by the electric motor; and
mechanical torque transmission control means, associated with the gear train, for permitting transmission of the driving torque of the electric motor to the steering shaft and blocking torque transmission from the steering shaft to the electric motor.

DE-A-2 247 135 discloses such an arrangement, in which the said control means comprises a single coil spring clutch which transmits torque from the motor to the steering shaft but not vice versa.

EP-A-0 081 025 discloses such an arrangement according to the preamble of claim 1, e.g. further comprising first and second rotary clutch wheels, and first and second mechanical clutches operable, when in an active state, for selectively engaging and disengaging the main gear with the first and second rotary clutch wheels. One of the two clutches is activated by turning the manually operable means in one of two senses, and the clutches are connected to the steering shaft by one-way clutches.

The object of the present invention is to provide a mechanical torque transmission control means which is an effective alternative to the known control means.

In accordance with the invention as defined in claim 1, the first and second rotary clutch wheels are rigidly connected to the steering shaft for rotation therewith; and the said control means comprise:
first and second motor torque responsive mechanical clutch enabling and disabling elements, responsive to respectively opposite first and second directions of driving torque of the electric motor, for switching respectively corresponding ones of the first and second mechanical clutches between an active state and an inactive state depending upon presence and absence of the corresponding direction of the driving torque.

The present invention will be understood more fully from the detailed description given herebelow and from the accompanying drawing of the preferred embodiment of the invention, which, however, should not be taken to limit the invention to the specific embodiment but are for explanation and understanding only.

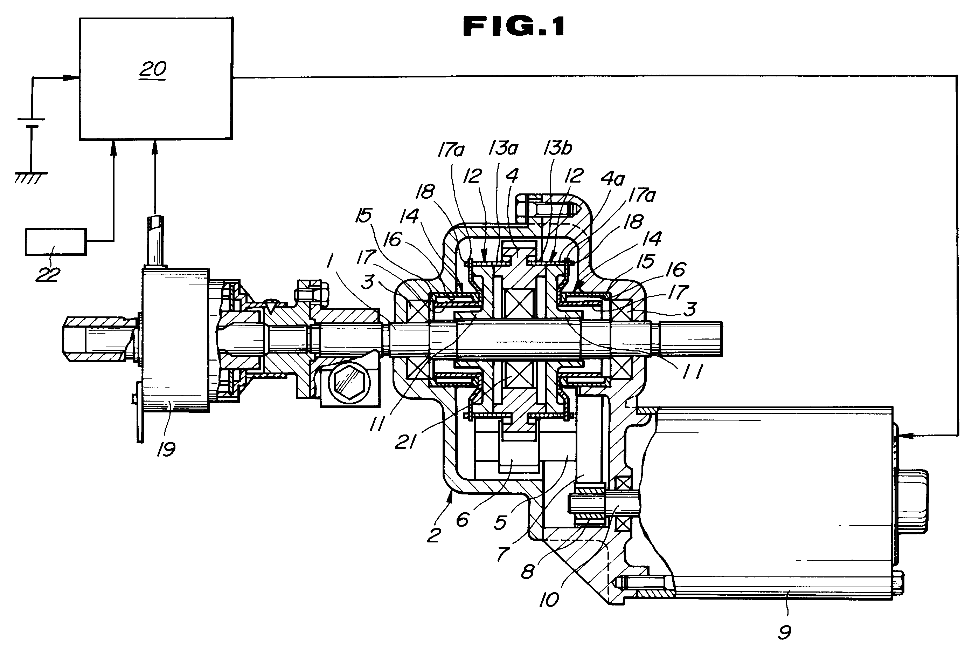

In the drawing the sole Figure (Figure 1) is a section of the preferred embodiment of an electric motor powered power steering arrangement according to the present invention.

Referring now to the drawing, the preferred embodiment of an electric motor powered power steering arrangement, according to the present invention, includes a steering shaft 1. The steering shaft 1 is rotatably supported in a housing 2 by means of a bearing 3. A main gear 4 is supported on the steering shaft 1 by means of a bearing 21 in such a manner that it can cause relative angular displacement with respect to the steering shaft.

A gear 6 is meshed with the main gear 4 and rotatably supported on a counter shaft 5. Another gear 7 is also rotatably mounted on the counter shaft 5. The gear 7 meshes with a motor gear 8 which is secured on a motor output shaft 10 of an electric motor 9. The gears 4, 6, 7 and 8 form a gear trains for transmitting motor driving torque to the steering shaft 1. Therefore, the output torque of the motor 9 is transmitted to the steering shaft 1 via the gear train.

A pair of clutch wheels 11 are arranged opposing to both of axial ends of the main gear 4. These clutch wheels 11 are rigidly secured on the steering shaft 1 for rotation therewith. Between each of the clutch wheels 11 and the main gear 4, a mechanical clutch 12 is provided. The mechanical clutch 12 comprises a coil spring 13a or 13b secured on the boss section 4a of the main gear 4 and the clutch wheel 11. A one-way clutch 14 is provided for restricting movement of the associated one of coil spring 13a and 13b. Each of the one-way clutches 14 has an outer holder 15 engaged with a holder receptacle recess 16 and an inner holder 17. The inner holder 17 has a flange 17a having the outer end engaged with the outer end 18 of the coil spring 13a and 13b. The flange 17a of the inner holder 17 thus prevents the associated one of the coil springs 13a and 13b from rotating in winding direction and permits the coil spring to rotate in unwinding direction.

The mechanical clutch 12 thus constructed operates as follows. Assuming that the steering shaft 1 is operated to rotate in right, the coil spring 13b is rotated in unwinding direction to expand the diameter thereof. On the other hand, the coil spring 13a is prevented from rotating in winding direction. Therefore, at this time, the coil spring 13a is not active for establishing engagement between the boss section 4a of the main gear 4 and the clutch wheel 11. On the other hand, assuming that the steering shaft 1 is operated to rotate in left, the coil spring 13a is rotated in unwinding direction to expand the diameter thereof. On the other hand, the coil spring 13b is prevented from rotating in winding direction. Therefore, at this time, the coil spring 13b is not active for establishing engagement between the boss section 4a of the main gear 4 and the clutch wheel 11. Therefore, in either case, the steering shaft 1 and the main gear 4 are held in decoupled position so as to permit free rotation relative to each other.

On the other hand, when the motor is driven for providing right hand driving torque, the coil spring 13b is driven in winding direction for coupling the main gear 4 and the clutch wheel 11. At the same time, the coil spring 13a is driven in unwinding direction. Therefore, the right handing driving torque is transmitted to the steering shaft via the interengaged main gear 4 and the clutch wheel 11. When the motor is driven for providing left hand driving torque, the coil spring 13a is driven in winding direction for coupling the main gear 4 and the clutch wheel 11. At the same time, the coil spring 13b is driven in unwinding direction. Therefore, the right handing driving torque is transmitted to the steering shaft via the interengaged main gear 4 and the clutch wheel 11.

A torque sensor 19 is provided on the steering shaft 1 in series to the housing. The torque sensor 19 is designed for monitoring steering torque to supply a steering torque indicative signal for a control unit 20. The control unit 20 also receives a vehicle speed indicative signal from a vehicle speed sensor 22. The control unit 20 derives a control current to be supplied to the electric motor 9 on the basis of the steering torque indicative signal and the vehicle speed indicative signal. The operation of the electric motor 9 is thus controlled by the control current supplied from the control unit.

With the construction set forth above, when the steering operation is made by a driver and thus the steering shaft is rotated, the operational torque entered through a steering wheel is detected by the torque sensor 19. As set forth above, the torque sensor supplies the steering torque indicative signal to the control unit 20. At the same time, the control unit 20 receives the vehicle speed indicative signal from the vehicle speed sensor 22. The control unit 20 thus feeds the control current derived on the basis of the steering torque indicative signal and the vehicle speed indicative signal, to the motor 9. With control current, the motor 9 is driven to establish interengagement of the main gear 4 and one of the clutch wheels 11. Therefore, the driving torque of the motor 9 is applied to the steering shaft 1 as the steering assist torque. On the other hand, the operational torque applied to the steering shaft 1 via the steering wheel will not cause interengagement of the main gear 4 and the clutch wheel 11 as long as the main gear is not rotatingly driven by the driving torque supplied form the motor. Therefore, the motor will never receive the manually received driving torque.

With the construction set forth above, since the mechanism for coupling and decoupling the electric motor and the steering shaft can be formed by mechanical clutch mechanism, the size of the clutch mechanism can be smaller than that of an electromagnetic clutch. Also, since the clutch mechanism in the shown embodiment of the power steering arrangement can be operated in purely mechanical fashion depending upon the power transmitting direction, no wiring for controlling the clutch mechanism is required.

Therefore, a compact, light-weight and low-cost electric power steering arrangement can be formulated.

While the present invention has been disclosed in terms of the preferred embodiment in order to facilitate better understanding of the invention, it should be appreciated that the invention can be embodied in various ways without departing form the principle of the invention. Therefore, the invention should be understood to include all possible embodiments and modifications to the shown embodiments which can be embodied without departing from the principle of the invention set out in the appended claims.

## Claims

1. An electric motor powered power steering arrangement for an automotive vehicle, comprising:
a steering shaft (1) which is connected to a steering mechanism for causing toe angle change of a vehicle wheel, the steering shaft (1) being connected to manually operable means for entry of steering demand;
an electric motor (9) responsive to a control signal for generating driving torque;
a gear train comprising a plurality of gears including a main gear (4) for transmitting driving torque generated by the electric motor (9);
mechanical torque transmission control means, associated with the gear train, for permitting transmission of the driving torque of the electric motor to the steering shaft and blocking torque transmission from the steering shaft to the electric motor; and
first and second rotary clutch wheels (11), and first and second mechanical clutches (12) operable, when in an active state, for selectively engaging and disengaging the main gear (4) with the first and second rotary clutch wheels (11);
characterized in that:
the first and second rotary clutch wheels (11) are rigidly connected to the steering shaft (1) for rotation therewith; and
the mechanical torque transmission control means comprise first and second motor torque responsive mechanical clutch enabling and disabling elements (14), responsive to respectively opposite first and second directions of driving torque of the electric motor (9), for switching respectively corresponding ones of the first and second mechanical clutches (12) between an active state and an inactive state depending upon presence and absence of the corresponding direction of the driving torque.

2. A power steering arrangement as claimed in claim 1, wherein each motor torque responsive mechanical clutch enabling and disabling element is a one-way clutch (14).

3. A power steering arrangement as claimed in claim 1 or 2, wherein the main gear (4) is rotatably supported on the steering shaft (1) between the clutch wheels (11).

4. A power steering arrangement as claimed in any preceding claim, wherein each mechanical clutch (12) is a coil spring clutch.

## Patentansprüche

1. Servolenkung mit Antrieb durch einen elektrischen Motor für ein Kraftzeug, mit:
einer Lenkwelle (1), die mit einem Lenkmechanismus verbunden ist, um den Spurwinkel eines Kraftfahrzeugrades zu ändern, wobei die Lenkwelle (1) mit einer manuell betätigbaren Einrichtung zum Eintritt der Lenkerfordernis verbunden ist;
einem elektrischen Motor (9), der auf ein Steuersignal anspricht, um ein Antriebsdrehmoment zu erzeugen;
ein Getriebe mit mehreren Zahnrädern mit einem Hauptzahnrad (4) zum Übertragen eines von dem elektrischen Motor (9) erzeugten Antriebsdrehmoments;
einer mechanischen Drehmomentübertragungssteuereinrichtung, die mit dem Getriebe verbunden ist, um die Übertragung des Antriebsdrehmoments des elektrischen Motors auf die Lenkwelle zuzulassen und die Drehmomentübertragung von der Lenkwelle auf den elektrischen Motor zu blockieren, und
ersten und zweiten Drehkupplungsrädern (11) und ersten und zweiten mechanische Kupplungen (12), die in einem aktiven Zustand wirksam sind, um wahlweise das Hauptzahnrad (4) mit dem ersten und dem zweiten Drehkupplungsrad (11) in Eingriff oder außer Eingriff zu bringen,
**dadurch gekennzeichnet,** daß
das erste und das zweite Drehkupplungsrad (11) starr mit der Lenkwelle (1) zur Drehung mit dieser verbunden sind und daß die mechanische Drehmomentübertragungssteuereinrichtung erste und zweite auf das Motordrehmoment ansprechende, die mechanische Kupplung wirksam und unwirksam machende Elemente (14) aufweist, die auf jeweils entgegengesetzte erste und zweite Richtungen des Antriebsdrehmoments des elektrischen Motors (9) ansprechen, um die zugehörige Kupplung der ersten und zweiten mechanischen Kupplungen (12) zwischen einem aktiven Zustand und einem unaktiven Zustand in Abhängigkeit von dem Vorhandensein oder Nichtvorhandensein der zugehörigen Richtung des Antriebsdrehmoments zu schalten.

2. Servolenkung nach Anspruch 1, wobei jedes auf das Motordrehmoment ansprechende, die mechanische Kupplung wirksam und unwirksam machende Element eine Einwegkupplung (14) ist.

3. Servolenkung nach Anspruch 1 oder 2, wobei das Hauptzahnrad (4) drehbar auf der Lenkwelle (1) zwischen den Kupplungsrädern (11) gehalten ist.

4. Servolenkung nach jedem vorhergehenden Anspruch, wobei jede mechanische Kupplung (12) eine Schraubenfederkupplung ist.

## Revendications

1. Direction assistée par moteur électrique pour un véhicule automobile comprenant :
un arbre de direction (1) qui est relié à un mécanisme de direction pour faire varier l'angle de braquage d'une roue de véhicule, l'arbre de direction (1) étant relié à un moyen manoeuvrable à la main pour introduire une commande de direction ;
un moteur électrique (9) répondant à un signal de commande pour développer un couple d'entraînement ;
un train d'engrenages comprenant une pluralité de pignons dont un pignon principal (4) pour transmettre un couple d'entraînement développé par le moteur électrique (9) ;
un moyen mécanique de commande de transmission du couple, associé au train d'engrenages, pour permettre la transmission du couple d'entraînement du moteur électrique à l'arbre de transmission et bloquer la transmission du couple entre l'arbre de direction et le moteur électrique; et
un premier et un second disques rotatifs d'embrayage (11), et un premier et un second embrayages mécaniques (12) susceptibles de fonctionner, lorsqu'ils sont à l'état actif, pour embrayer et débrayer sélectivement le pignon principal (4) avec le premier et le second disques rotatifs d'embrayage (11) ;
caractérisé en ce que :
le premier et le second disques rotatifs d'embrayage (11) sont rigidement reliés à l'arbre de direction (1) pour être entraînés en rotation avec lui ; et
en ce que les moyens mécaniques de commande de transmission du couple comprennent un premier et un second éléments d'embrayage et de débrayage mécaniques (14) répondant au couple du moteur, répondant aux première et seconde directions opposées respectives du couple d'entraînement du moteur électrique (9), pour commuter les premier et second embrayages mécaniques correspondants (12) entre un état actif et un état inactif en fonction de la présence et de l'absence de la direction correspondante du coupe d'entraînement.

2. Direction assistée selon la revendication 1, dans laquelle chaque élément d'embrayage et de débrayage mécanique répondant au couple moteur est un embrayage mono-directionnel (14).

3. Direction assistée selon la revendication 1 ou 2, dans laquelle le pignon principal (4) est supporté en rotation sur l'arbre de direction (1) entre les disques d'embrayage (11).

4. Direction assistée selon l'une quelconque des revendications précédentes, dans laquelle chaque embrayage mécanique (12) est un embrayage à ressort en spirale.
